(19) Europäisches Patentamt

European Patent Office

Office européen des brevets

(11) **EP 1 318 124 B1**

(12) **EUROPÄISCHE PATENTSCHRIFT**

(45) Veröffentlichungstag und Bekanntmachung des Hinweises auf die Patenterteilung:
**20.10.2004 Patentblatt 2004/43**

(51) Int Cl.$^7$: **C03C 3/06**, C03C 4/00, C03B 19/14

(21) Anmeldenummer: **02027123.5**

(22) Anmeldetag: **04.12.2002**

(54) **Quarzglasrohling für ein optisches Bauteil sowie Verfahren zur Herstellung und Verwendung desselben**

Quartz glass preform for an optical element as well as process of manufacture and use thereof

Préforme en verre de silice pour un élément optique, son utilisation et procédé de sa fabrication

(84) Benannte Vertragsstaaten:
**AT DE FR GB NL**

(30) Priorität: **06.12.2001 DE 10159961**

(43) Veröffentlichungstag der Anmeldung:
**11.06.2003 Patentblatt 2003/24**

(73) Patentinhaber: **Heraeus Quarzglas GmbH & Co. KG**
**63450 Hanau (DE)**

(72) Erfinder:
• **Kühn, Bodo**
**63450 Hanau (DE)**

• **Uebbing, Bruno, Dr.**
**63755 Alzenau (DE)**
• **Trommer, Martin, Dr.**
**36381 Schlüchtern (DE)**
• **Ochs, Stefan, Dr.**
**65520 Bad Camberg (DE)**
• **Thomas, Stephan, Dr.**
**63838 Grosskrotzenburg (DE)**
• **Kaiser, Steffen**
**63452 Hanau (DE)**
• **Vydra, Jan, Dr.**
**63456 Hanau (DE)**

(56) Entgegenhaltungen:
EP-A- 0 673 888          WO-A-99/38814

## Beschreibung

Die vorliegende Erfindung betrifft einen Quarzglasrohling für ein optisches Bauteil zur Übertragung ultravioletter Strahlung einer Wellenlänge von 250 nm und kürzer.

Weiterhin betrifft die Erfindung ein Verfahren zur Herstellung eines derartigen Quarzglasrohlings, umfassend die Herstellung mindestens einer ersten, zylinderförmigen Quarzglasvorform durch Flammenhydrolyse einer Si-enthaltenden Verbindung, wobei $SiO_2$- Partikel gebildet und auf einem rotierenden Träger schichtweise unter Bildung eines porösen Sootkörpers abgeschieden werden und der Sootkörper anschließend zu der Quarzglasvorform verglast wird, die über ihr Volumen einen inhomogenen $H_2$-Konzentrationsverlauf aufweist

Außerdem betrifft die Erfindung eine Verwendung eines Quarzglasrohlings für die Herstellung eines Bauteils für den Einsatz in der Mikrolithographie in Verbindung mit ultravioletter Strahlung einer Wellenlänge von 250 nm und kürzer.

Optische Bauteile aus Quarzglas werden insbesondere für die Übertragung energiereicher, ultravioletter Laserstrahlung beispielsweise als optische Fasern oder in Form von Belichtungsoptiken in Mikrolithographiegeräten für die Herstellung hochintegrierter Schaltungen in Halbleiterchips eingesetzt. Die Belichtungssysteme moderner Mikrolithographiegeräte sind mit Excimerlasern bestückt, die energiereiche, gepulste UV-Strahlung einer Wellenlänge von 248 nm (KrF-Laser) oder von 193 nm (ArF-Laser) abgeben.

Kurzwellige UV-Strahlung kann in optischen Bauteilen aus synthetischem Quarzglas Defekte erzeugen, die zu Absorptionen führen. Neben den Bestrahlungsbedingungen hängen Art und Ausmaß einer Defektbildung und der dadurch induzierten Absorption von der Qualität des jeweiligen Quarzglases ab, die im wesentlichen durch strukturelle Eigenschaften, wie Dichte, Brechzahlverlauf und Homogenität und von der chemischen Zusammensetzung bestimmt wird.

Eine modellhafte Formel drückt diesen Zusammenhang zwischen den Bestrahlungsbedingungen, den Materialfaktoren und der induzierten Absorption $\alpha_{in}$ folgendermaßen aus:

$$\alpha_{in} = a \times \varepsilon^{b} \times P \tag{1}$$

wobei a und b Materialfaktoren sind und $\varepsilon$ und P für die Energiedichte bzw. die Pulszahl stehen.

Die Anzahl der induzierten strukturellen Defekte und die dadurch induzierte Absorption sind also abhängig von der Anzahl der einwirkenden Laserpulse und deren Energiedichte sowie von Materialfaktoren.

Der Einfluß der chemischen Zusammensetzung des Quarzglases auf das Schädigungsverhalten bei der Bestrahlung mit energiereichem UV-Licht ist beispielsweise in der EP-A1 401 845 beschrieben. Eine hohe Strahlenbeständigkeit ergibt sich demnach bei einem Quarzglas, das sich durch hohe Reinheit, einen OH-Gehalt im Bereich von 100 bis ca. 1000 Gew-ppm und gleichzeitig durch eine relativ hohe Wasserstoffkonzentration von mindestens $5 \times 10^{16}$ Molekülen pro $cm^3$ (bezogen auf das Volumen des Quarzglases) auszeichnet. Weiterhin weist das bekannte synthetische Quarzglas eine Spannungsdoppelbrechung von weniger als 5 nm/cm auf, und es ist weitgehend frei von Sauerstoffdefektstellen.

In der EP-A1 401 845 werden außerdem Verfahren zur Herstellung von synthetischem Quarzglas durch Flammenhydrolyse siliziumhaltiger Verbindungen beschrieben. Diese lassen sich anhand der Ausgangssubstanzen und der Art und Weise der Verglasung der abgeschiedenen $SiO_2$-Partikel unterscheiden. Eine häufig eingesetzte Ausgangssubstanz bei der Herstellung von synthetischem Quarzglas durch Flammenhydrolyse ist $SiCl_4$. Es werden aber auch andere, beispielsweise chlorfreie siliciumhaltige organische Verbindungen verwendet, wie Silane oder Siloxane. In jedem Fall werden auf einem rotierenden Substrat $SiO_2$-Partikel schichtweise abgeschieden. Bei hinreichend hoher Temperatur auf der Oberfläche des Substrats kommt es zu einem unmittelbaren Verglasen der $SiO_2$-Partikel ("Direktverglasen"), Im Unterschied dazu wird bei dem sogenannten "Sootverfahren" die Temperatur während der Abscheidung der $SiO_2$-Partikel so niedrig gehalten, dass ein poröser Sootkörper gebildet wird, bei dem $SiO_2$-Partikel nicht oder wenig verglast sind. Das Verglasen unter Bildung von Quarzglas erfolgt beim Sootverfahren durch nachträgliches Sintern des Sootkörpers. Beide Herstellungsverfahren führen zu einem dichten, transparenten, hochreinen Quarzglas, wobei die Herstellungskosten beim Sootverfahren niedriger sind als beim Direktverglasen.

Um mechanische Spannungen innerhalb des Rohlings abzubauen und um eine homogene Verteilung der fiktiven Temperatur zu erreichen, wird dieser üblicherweise getempert. In der EP-A 401 845 wird ein Temperprogramm vorgeschlagen, bei dem der Rohling einer 50-stündigen Haltezeit bei einer Temperatur von etwa 1100 °C unterworfen wird und abschließend in einem langsamen Abkühlschritt mit einer Abkühlrate von 2 °/h auf 900 °C und dann im geschlossenen Ofen auf Raumtemperatur abgekühlt wird. Bei dieser Temperaturbehandlung kann es durch Ausdiffusion von Komponenten - insbesondere von Wasserstoff - zu lokalen Veränderungen der chemischen Zusammensetzung und zu einem Konzentrationsgradienten von den oberflächennahen Bereichen des Rohlings nach Innen kommen.

Um die defektausheilende Wirkung von Wasserstoff auf die Strahlenbeständigkeit des Quarzglases zu erzielen, wird daher in der EP-A1 401 845 empfohlen, den getemperten Quarzglas-Rohling nachträglich mit Wasserstoff zu beladen, indem dieser bei erhöhter Temperatur in wasserstoffhaltiger Atmosphäre behandelt wird.

In der Literatur sind eine Vielzahl von Schädigungsmustern beschrieben, bei denen es bei andauernder UV-Bestrahlung zu einem Anstieg der Absorption kommt. Die induzierte Absorption kann zum Beispiel linear ansteigen, oder es wird nach einem anfänglichen Anstieg eine Sättigung erreicht. Weiterhin wird beobachtet, dass eine anfänglich registrierte Absorptionsbande zunächst wenige Minuten nach Abschalten des Lasers verschwindet, sich aber nach erneuter Bestrahlung schnell wieder auf dem einmal erreichten Niveau wiederherstellt. Dieses Verhalten wird als "rapid-damage-process" (RDP) bezeichnet. Hintergrund diesen Verhaltens ist, dass Wasserstoffmoleküle die Netzwerkdefekte im Quarzglas absättigen, wobei aber die Stabilität der Bindungen an den Defektstellen gering ist, so dass sie erneut aufbrechen, wenn das Bauteil wieder bestrahlt wird. Es ist auch ein Schädigungsverhalten bekannt, bei dem sich strukturelle Defekte offenbar derart kumulieren, dass sie sich in einer plötzlichen, starken Zunahme der Absorption äußern. Der starke Anstieg der Absorption bei dem zuletzt beschriebenen Schädigungsverhalten wird in der Literatur als SAT-Effekt bezeichnet.

Bei dem aus der EP-A1 401 845 bekannten Quarzglas verursacht UV-Strahlung nur eine vergleichsweise geringe Absorptionszunahme, so dass sich dieses Quarzglas insoweit durch eine hohe Beständigkeit gegenüber kurzwelliger UV-Strahlung auszeichnet. Jedoch können neben dem Auftreten von Absorption bzw. reduzierter Transmission auch andere Schädigungsmechanismen wirksam werden, die sich beispielsweise in der Generierung von Fluoreszenz oder in einer Veränderung des Brechungsindex zeigen können.

Ein bekanntes Phänomen in diesem Zusammenhang ist die sogenannte "Kompaktierung", die während bzw. nach Laser-Bestrahlung mit hoher Energiedichte auftritt. Dieser Effekt äußert sich in einer lokalen Dichteerhöhung, die zu einem Anstieg des Brechungsindex und damit zu einer Verschlechterung der Abbildungseigenschaften des optischen Bauteils führt.

Ein gegenteiliger Effekt kann jedoch ebenso auftreten, wenn ein optisches Bauteil aus Quarzglas mit Laserstrahlung geringer Energiedichte aber hoher Pulszahl beaufschlagt wird. Unter diesen Bedingungen wird eine sogenannte "Dekompaktierung" beobachtet (in der angelsächsischen Literatur auch als "rarefaction" bezeichnet), die mit einer Erniedrigung des Brechungsindex einhergeht. Dies führt zu einer Verschlechterung der Abbildungseigenschaften. In der Literatur wurde dies beschrieben von C. K. Van Peski, R. Morton und Z. Bor ("Behaviour of fused silica irradiated by low level 193 nm excimer laser for tens of billions of pulses", J. Non-Cryst. Solids 265 (2000) S.285-289).

Kompaktierung und Dekompaktierung sind somit Defekte, die sich nicht zwangsläufig in einer Zunahme der strahlungsinduzierten Absorption äußeren, die aber die Lebensdauer eines optischen Bauteils begrenzen können.

Der vorliegenden Erfindung liegt daher die Aufgabe zugrunde, einen Rohling aus synthetischem Quarzglas für ein optisches Bauteil für die Übertragung ultravioletter Strahlung einer Wellenlänge von 250 nm und kürzer bereitzustellen, das eine geringe induzierte Absorption aufweist und das gleichzeitig hinsichtlich Kompaktierung und Dekompaktierung optimiert ist. Weiterhin liegt der Erfindung die Aufgabe zugrunde, ein kostengünstiges Verfahren zur Herstellung eines derartigen optischen Bauteils sowie eine geeignete Verwendung dafür anzugeben.

Hinsichtlich des Rohlings wird diese Aufgabe erfindungsgemäß durch eine Ausführungsform eines Quarzglas-Rohlings gelöst, der die Kombination folgender Eigenschaften aufweist:

- ■   eine Glasstruktur im wesentlichen ohne Sauerstoffdefektstellen,
- ■   einen $H_2$-Gehalt im Bereich von 0,1 x $10^{16}$ Molekülen/$cm^3$ bis 4,0 x $10^{16}$ Molekülen/$cm^3$,
- ■   einen OH-Gehalt im Bereich von 125 Gew-ppm bis 450 Gew-ppm,
- ■   einen Gehalt an SiH-Gruppen von weniger als 5 x $10^{16}$ Molekülen/$cm^3$
- ■   eine Inhomogenität im Brechungsindex $\Delta$n von weniger als 2 ppm, und
- ■   eine Spannungsdoppelbrechung von weniger als 2 nm/cm.

Unter einer Glasstruktur, die im wesentlichen frei von Sauerstoffdefektstellen ist, wird hier eine Glasstruktur verstanden, bei der die Konzentrationen von Sauerstoff-Unterschussdefekten und von Sauerstoff-Überschussdefekten unterhalb der Nachweisbarkeitsgrenze der Methode von Shelby liegen. Diese Nachweis-Methode ist veröffentlicht in "Reaction of hydrogen with hydroxyl-free vitreous silica" (J. Appl. Phys., Vol. 51, No. 5 (Mai 1980), S. 2589-2593). Quantitativ ergibt sich dabei eine Anzahl an Sauerstoff-Unterschussdefekten oder an Sauerstoff-Überschussdefekten in der Glasstruktur von nicht mehr als etwa $10^{17}$ pro Gramm Quarzglas.

Idealerweise sind die angegebenen Komponenten über das Volumen des optischen Bauteils gleichmäßig verteilt. Die genannten Konzentrationsangaben beziehen sich hier auf das durchstrahlte Volumen des Bauteils. Der OH-Gehalt ergibt sich durch Messung der IR-Absorption nach der Methode von D. M. Dodd et al. ("Optical Determinations of OH in Fused Silica", J. Appl. Physics (1966), S. 3911). Der $H_2$-Gehalt wird anhand einer Raman-Messung ermittelt, die erstmals von Khotimchenko et al. vorgeschlagen worden ist ("Determining the Content of Hydrogen Dissolved in Quartz Glass Using the Methods of Raman Scattering and Mass Spectrometry" Zhurnal Prikladnoi Spektroskopii, Vol. 46, No. 6 (Juni 1987), S. 987-991). Der Gehalt an SiH-Gruppen wird mittels Raman-Spektroskopie ermittelt, wobei eine Kalibrierung anhand einer chemischen Reaktion erfolgt: Si-O-Si + H2 → Si-H + Si-OH , wie in Shelby "Reaction of hydrogen with hydroxyl-free vitreous silica" (J. Appl. Phys., Vol. 51, No. 5 (Mai 1980), S. 2589-2593) beschrieben.

Die Inhomogenität des Brechungsindex $\Delta n$ wird interferometrisch bei einer Wellenlänge von 633 nm (He-Ne-Laser) bestimmt, wobei sich $\Delta n$ als Differenz ergibt zwischen dem Maximalwert und dem Minimalwert der Brechungsindexverteilung ergibt, gemessen über dem optisch genutzten Flächenbereich, auch CA Bereich ("clear aperture") genannt. Der CA Bereich ergibt sich durch Projektion des durchstrahlten Volumens auf eine Ebene senkrecht zur Durchstrahlungsrichtung.

Die Spannungsdoppelbrechung wird interferometrisch bei einer Wellenlänge von 633 nm (He-Ne-Laser) nach der in "Measurement of the Residual Birefingence Distribution in Glass Laser Disk by Transverse Zeeman Laser" (Electronics and Communications in Japan, Part 2, Vol. 74, No. 5, 1991; (übersetzt aus Denshi Joho Tsushin Gakkai Ronbunshi Vol 73-C-I, No. 10, 1990 pp. 652 - 657) beschriebenen Methode ermittelt.

Gegenüber den bisher in der Literatur beschriebenen und im Hinblick auf eine hohe Strahlenbeständigkeit gegenüber kurzwelliger UV-Strahlung ausgelegten Quarzglas-Qualitäten, zeichnet sich das Quarzglas, aus dem der erfindungsgemäße Rohling besteht unter anderem durch einen vergleichsweise geringen Wasserstoffgehalt bei einem mittleren OH-Gehalt aus. Derartiges Quarzglas ist weder mittels des oben beschriebenen "Sootverfahrens" noch durch "Direktverglasen" ohne weiteres herstellbar. Denn beim Direktverglasen wird üblicherweise Quarzglas mit einem OH-Gehalt von 450 bis 1200 Gew.-ppm und einem $H_2$-Gehalt um $1 \times 10^{18}$ Moleküle/$cm^3$ erhalten, wogegen für Quarzglas, das nach dem Sootverfahren hergestellt wird, eher geringe OH-Gehalte im Bereich einiger Gew-ppm- bis 200 Gew-ppm typisch sind.

Es hat sich gezeigt, dass ein optisches Bauteil, das aus einem Quarzglas-Rohling mit den oben genannten Eigenschaften gefertigt wird, die Schädigungsmechanismen, die zu Kompaktierung und Dekompaktierung führen, vermieden oder zumindest deutlich reduziert sind. Brechzahländerungen im Verlauf des bestimmungsgemäßen Einsatzes deratiger Bauteile werden vollständig oder weitgehend vermieden, so dass die genannten Schädigungsmechanismen die Lebensdauer der aus dem erfindungsgemäßen Rohling gefertigten optischen Bauteile nicht begrenzen.

Diese Wirkung der oben genannten Eigenschafts-Kombination auf das Schädigungsverhalten gegenüber kurzwelliger UV-Strahlung ist empirisch nachgewiesen worden, wie im Folgenden noch näher erläutert wird. Dabei hat sich außerdem gezeigt, dass OH-Gehalte von weniger als 125 Gew-ppm, wie sie für das nach dem Sootverfahren hergestellte Quarzglas typisch sind, zu Kompaktierung führen. Quarzglas mit OH-Gehalten oberhalb von mehr als 450 Gew-ppm zeigt eine stärkere Tendenz zu Dekompaktierung und - bei wasserstoffbeladenem Sootmaterial - das als "RDP" bezeichnete Schädigungsverhalten.

Der zu RDP führende Schädigungsmechanismus wirkt sich bei $H_2$-Gehalten von mehr als $4,0 \times 10^{16}$ Molekülen/$cm^3$ besonders deutlich aus. Außerdem zeigt ein derartiges Quarzglas eine stärkere Tendenz zur Dekompaktierung, wogegen bei einem $H_2$-Gehalt von weniger als $0,1 \times 10^{16}$ Molekülen/$cm^3$ die oben erwähnte defektausheilende Wirkung von Wasserstoff so gering ist, dass es während des bestimmungsgemäßen Einsatzes des optischen Bauteils zu nicht tolerierbaren Transmissionsverlusten kommt.

Demgegenüber ist beim erfindungsgemäßen Rohling das Quarzglas sowohl im Hinblick auf Kompaktierung als auch Dekompaktierung optimiert, und es weist gleichzeitig eine geringe induzierte Absorption gegenüber kurzwelliger UV-Strahlung auf. Diese Optimierung ermöglicht insbesondere den Einsatz von nach dem Sootverfahren hergestellten Quarzglas auch für optische Bauteile, die hohen Anforderungen an die Konstanz ihrer Abbildungseigenschaften unterliegen.

Es hat sich als besonders günstig erwiesen, wenn der OH-Gehalt im Rohling im Bereich von 200 Gew-ppm bis 350 Gew-ppm liegt. Ein OH-Gehalt in diesem Bereich stellt einen bevorzugten Kompromiss zwischen Dekompaktierung und Kompaktierung einerseits und RDP andererseits dar.

Vorteilhafterweise liegt der $H_2$-Gehalt im Bereich von $1 \times 10^{16}$ Moleküle/$cm^3$ bis $3 \times 10^{16}$ Moleküle/$cm^3$. Bei einem Quarzglas-Rohling mit einem $H_2$-Gehalt in diesem Bereich ist sowohl die günstige, defektausheilende Wirkung des Wasserstoffs in besonders hohem Maße vorhanden, und es wird gleichzeitig Dekompaktierung weitgehend vermieden. Auch diese Optimierung ermöglicht insbesondere den Einsatz von nach dem Sootverfahren hergestelltem Quarzglas auch für Anwendungsfälle, in denen Kompaktierung und Dekompaktierung kritische, die Lebensdauer begrenzende Effekte darstellen.

Hinsichtlich des Verfahrens zur Herstellung eines Quarzglasrohlings wird die oben angegebene Aufgabe ausgehend von dem eingangs genannten Verfahren erfindungsgemäß dadurch gelöst, dass die Quarzglasvorform einer Homogenisierungsbehandlung unterzogen wird, durch welche ein radialer $H_2$-Konzentrationsverlauf mit einer maximalen Abweichung von 25% von einem Mittelwert, der im Bereich von $0,1 \times 10^{16}$ Molekülen/$cm^3$ bis $4,0 \times 10^{16}$ Molekülen/$cm^3$ liegt, eingestellt wird.

Bei erfindungsgemäßen Verfahren wird ein $H_2$-Gehalt eingestellt, der im Mittel im Bereich von $0,1 \times 10^{16}$ Molekülen/$cm^3$ bis $4,0 \times 10^{16}$ Molekülen/$cm^3$ liegt. Bei $H_2$-Gehalten von mehr als $4,0 \times 10^{16}$ Molekülen/$cm^3$ wirkt sich

der zu RDP führende Schädigungsmechanismus besonders deutlich aus, wogegen bei einem $H_2$-Gehalt von weniger als $0,1 \times 10^{16}$ Molekülen/cm$^3$ die oben erwähnte defektausheilende Wirkung von Wasserstoff so gering ist, dass es während des bestimmungsgemäßen Einsatzes des optischen Bauteils zu nicht tolerierbaren Transmissionsverlusten kommt.

Der Sootkörper enthält herstellungsbedingt Wasserstoff. Die daraus durch Verglasen erhaltene Quarzglasvorform weist üblicherweise über ihr Volumen einen inhomogenen $H_2$-Konzentrationsverlauf auf. Die Inhomogenität H$_2$-Konzentrationsverlauf stellt sich infolge der Temperaturbehandlung des Sootkörpers beim Verglasen ein. Aufgrund der hohen Diffusionsgeschwindigkeit von Wasserstoff in Quarzglas verarmen die oberflächennahen Bereiche beim Verglasen rascher als zentrale Bereiche des Sootkörpers bzw. der Quarzglasvorform. Der dadurch entstehende Konzentrationsgradient wird erfindungsgemäß durch eine anschließende Homogenisierungsbehandlung ganz oder teilweise beseitigt. Dabei wird ein radialer Verlauf der $H_2$-Konzentration in der Quarzglasvorform eingestellt, derart, dass diese von dem Mittelwert um maximal 25% abweicht.

Im Unterschied zu dem oben beschriebenen, bekannten Verfahren wird erfindungsgemäß zunächst in der Quarzglasvorform der Wasserstoffgehalt in der erforderlichen Konzentration eingestellt - unter Inkaufnahme eines radialen $H_2$-Konzentrations-gradienten- und erst anschließen wird der Wasserstoff mittels der Homogenisierungsbehandlung innerhalb der Quarzglasvorform verteilt. Wesentlich dabei ist, vor der Homogenisierungsbehandlung in der Quarzglasvorform genügend Wasserstoff enthalten ist, so dass im Verlauf der Homogenisierungsbehandlung ein Konzentrationsmittelwert im oben genannten Bereich eingestellt werden kann. Hierzu wird in der Quarzglasvorform vor der Homogenisierungsbehandlung ein über das Volumen gemittelter Wasserstoffgehalt eingestellt, der mindestens so hoch ist wie der einzustellende Mittelwert der $H_2$-Konzentration. Der Wasserstoffgehalt in der Quarzglasvorform vor Homogenisierungsbehandlung wird im Folgenden auch als "anfänglicher Wasserstoffgehalt" bezeichnet.

Mittels der Homogenisierungsbehandlung wird erreicht, dass eine ursprünglich starker radialer Gradient im $H_2$-Konzentrationsverlauf der Quarzglasvorfom beseitigt oder vermindert wird.

Je homogener der Wasserstoff im Volumen der Quarzglasvorform verteilt ist, um so günstiger wirkt sich dies auf die optischen Eigenschaften des daraus gefertigten Bauteils oder der daraus gefertigten optischen Bauteile aus. Im Hinblick hierauf wird eine Verfahrensweise bevorzugt, bei der durch die Homogenisierungsbehandlung ein radialer $H_2$-Konzentrationsverlauf mit einer maximalen Abweichung von 15% vom Mittelwert erhalten wird.

Als günstig hat es sich erwiesen, wenn die Quarzglasvorform durch Verglasen des Sootkörper unter einer $H_2$-enthaltenden Atmosphäre hergestellt wird. Hierdurch wird der oben erläuterte anfängliche Wasserstoffgehalt in der Quarzglasvorform eingestellt. Je nach Wasserstoffpartialdruck in der den Sootkörper umgebenden Atmosphäre wird dabei die Ausdiffusion von Wasserstoff aus dem Sootkörper vermindert, so dass sich ein geringerer radialer $H_2$-Konzentrationsgradient von der freien Oberfläche nach Innen einstellt als ohne die wasserstoffhaltige Atmosphäre. Dies erleichtert die Einstellung eines homogenen, radialen $H_2$-Konzentrationsverlaufs in der anschließenden Homogenisierungsbehandlung. Bei einem hohen Wasserstoffpartialdruck kann es aber auch zu einer zusätzlichen Beladung der Quarzglasvorform mit Wasserstoffkommen. Dabei bildet sich ein von Außen (Oberfläche) nach Innen abnehmender $H_2$-Konzentrationsgradient aus, der ebenfalls in einer nachfolgenden Homogenisierungsbehandlung beseitigt oder verringert wird.

Vorzugsweise ist die $H_2$-enthaltende Atmosphäre beim Verglasen eine $H_2$/He-Atmosphäre oder eine $H_2$/N$_2$-Atmosphäre oder eine $H_2$/H$_2$O-Atmosphäre. Eine $H_2$/H$_2$O-Atmosphäre stellt sich zum Beispiel ein, wenn im Sootkörper enthaltenes Wasser mit Kohlenstoff reagiert, der beispielsweise aus Graphitelementen des Vergasungsofens stammen kann.

Daran anschließend oder alternativ dazu wird zur Einstellung des erforderlichen anfänglichen Wasserstoffgehalts vorteilhafterweise ein Verfahrensschritt durchgeführt, bei dem die Quarzglasvorform einer den Wasserstoffgehalt absenkenden Temperbehandlung unterzogen wird. Durch die Ausdiffusion lässt sich der anfänglichen Wasserstoffgehalt besonders exakt einstellen.

Es wird eine Verfahrensweise bevorzugt, bei der die Homogenisierungsbehandlung durch Verdrillen und Wenden der Quarzglasvorform erfolgt. Hierbei lässt sich eine homogene Verteilung des in der Quarzglasvorfom enthaltenen Wasserstoffs in allen Raumrichtungen erreichen. Durch einmaliges oder mehrmaliges Wenden werden in einer Ebene senkrecht zur Rotationsachse beim Verdrillen verbleibende Schlieren beseitigt. Das Homogenisieren von Quarzglas durch Verdrillen und Wenden ist in der DE 42 04 406 C2 und in der EP-A1 673 888 beschrieben.

Wie bereits erwähnt, ist ein Quarzglas mit den oben für den erfindungsgemäßen Rohling genannten Eigenschaften mittels "Sootverfahren" oder "Direktverglasen" nicht ohne weiteres herstellbar. Dieses Herstellungsproblem betrifft insbesondere die Einstellung eines mittleren OH-Gehalts im Bereich von 125 Gew-ppm bis 450 Gew-ppm. Die Einstellung eines OH-Gehalts oberhalb von etwa 300 Gew-ppm durch Sootverfahren ist aufgrund einer beim Verglasen des Sootkörpers einsetzenden Blasenbildung problematisch, während durch Direktverglasen ein OH-Gehalt unterhalb von etwa 300 Gew.-ppm praktisch kaum zu erreichen ist.

Im Hinblick hierauf ergibt sich weitere Verbesserung, indem die Homogenisierungsbehandlung ein Mischen der ersten Quarzglasvorform mit einer zweiten Quarzglasvorform unter Bildung eines Mischquarzglases mit einem OH-Gehalt im Mittel im Bereich von 125 bis 450 Gew-ppm insbesondere 200 bis 350 Gew-ppm umfasst, wobei ein OH-Gehalt im Bereich von 125 Gew-ppm bis 450 Gew-ppm eingestellt wird.

Erfindungsgemäß wird daher der Rohling durch Mischen von mindestens zwei Quarzglas-Qualitäten erhalten, die sich in ihren OH-Gehalten unterscheiden. Die erste Quarzglasvorform (im Folgenden auch als "erstes Quarzglas" bezeichnet) weist dabei einen niedrigeren als den einzustellenden, mittleren OH-Gehalt auf und die zweite Quarzglasvorform (im Folgenden auch als "zweites Quarzglas" bezeichnet) einen höheren als den einzustellenden, mittleren OH-Gehalt auf. Durch das Homogenisieren ergibt sich ein Mischquarzglas, in welchem sich je nach eingestellten Mengenverhältnis von erstem Quarzglas und zweitem Quarzglas ein mittlerer OH-Gehalt zwischen den jeweiligen OH-Gehalten der Quarzglas-Qualitäten ergibt. Auf diese Weise lässt sich ein Mischquarzglas mit einem OH-Gehalt im Bereich von 125 Gew-ppm bis 450 Gew-ppm kostengünstig herstellen.

Das Mischen des ersten und des zweiten Quarzglases erfolgt entweder durch Erweichen der Gläser und Homogenisieren in einer Form, oder dadurch, dass aus den jeweiligen Quarzglas-Qualitäten hergestellte Formkörper miteinander verdrillt und anschließend durch Wenden homogenisiert werden.

Durch das Mischen der Quarzglas-Qualitäten wird auch hinsichtlich der übrigen Komponenten des erfindungsgemäßen Rohlings - insbesondere dem $H_2$-Gehalt und dem Gehalt an SiH-Gruppen - eine entsprechende mittlere Konzentration im Mischquarzglas erhalten.

Die daraus resultierenden Eigenschaften des Mischquarzglases stimmen mit denjenigen des erfindungsgemäßen Quarzglas-Rohlings überein, so dass auf die obigen Erläuterungen insoweit verwiesen wird.

In einer besonders bevorzugten Verfahrensweise werden zur Herstellung der zweiten Quarzglasvorform $SiO_2$-Partikel gebildet und auf einen rotierenden Träger abgeschieden und direkt verglast. Hierbei werden demnach Quarzglasqualitäten gemischt, von denen mindestens eine mittels Sootverfahren und mindestens eine andere mittels Direktverglasen erhalten wird. Diese Quarzglas-Qualitäten sind für die Einstellung eines mittleren OH-Gehaltes gemäß der vorliegenden Erfindung besonders gut geeignet. Um Blasenbildung beim Verglasen zu vermeiden muss bei den nach dem Sootverfahren erhaltenen porösen Sootkörpern ein OH-Gehalt von maximal etwa 300 Gew-ppm eingestellt sein. Hierzu werden die Sootkörper üblicherweise einer Dehydratationsbehandlung in trocknender Atmosphäre unterzogen, wobei sich der OH-Gehalt bis in den ppb-Bereich absenken lässt. Nach dem Verglasen und einer anschließenden Homogenisierung des Quarzglases liegt der $H_2$-Gehalt bei den nach dem Sootverfahren hergestellten Quarzglas in der Regel unterhalb der Nachweisgrenze von $1 \times 10^{15}$ Molekülen/cm$^3$. Demgegenüber weisen die durch Flammenhydrolyse nach dem Direktverglasen erzeugten Quarzgläser herstellungsbedingt einen relativ hohen OH-Gehalt von einigen hundert Gew-ppm und einen hohen $H_2$-Gehalt von mehr als $10^{17}$ Molekülen/cm$^3$ auf. Durch Mischen der beiden Quarzglas-Qualitäten kann je nach Einstellung der jeweiligen Mengenverhältnisse kostengünstig ein Misch-Quarzglas erhalten werden, das im Hinblick auf den einzustellenden $H_2$-Gehalt, vorzugsweise jedoch hinsichtlich des OH-Gehalts, optimiert ist.

Insbesondere im Hinblick auf die oben erläuterten typischen Unterschiede der chemischen Zusammensetzungen von Quarzglas, das nach dem Sootverfahren erhalten wird und solchem, das durch Direktverglasen erzeugt wird, wird eine Verfahrensweise bevorzugt, bei der das erste Quarzglas einen OH-Gehalt im Bereich von 10 Gew-ppm bis 300 Gew-ppm, das zweite Quarzglas einen OH-Gehalt im Bereich von 400 Gew-ppm bis 1300 Gew-ppm aufweist.

Dabei hat es sich als besonders vorteilhaft erwiesen, wenn das Mischen durch Verdrillen und Wenden von je einem Quarzglaskörper des ersten Quarzglases mit einem des zweiten Quarzglases erfolgt. Im einfachsten Fall handelt es sich bei den Quarzglaskörpern um langestreckte Zylinder (Rohre und/oder Stäbe), die in einem ersten Verfahrensschritt längsseitig aneinanderliegend erweicht und dabei um eine parallel zur Längsachse verlaufenden Rotationsachse miteinander verdrillt werden. Dabei verbleibende Schlieren in einer Ebene senkrecht zur Rotationsachse werden durch einmaliges oder mehrmaliges Wenden beseitigt.

Hinsichtlich der Verwendung des Quarzglasrohlings wird die oben angegebene Aufgabe erfindungsgemäß dadurch gelöst, dass für eine vorgegebene Pulszahl P ein Quarzglas ausgewählt wird, das einen Mindestwasserstoffgehalt $C_{H2min}$ und einen Maximalwasserstoffgehalt $C_{H2max}$ aufweist, die folgenden Bemessungsregeln genügen:

$$C_{H2min} \text{ [Moleküle/cm}^3\text{]} = 1{,}0 \times 10^6 \; \varepsilon^2 \; P \qquad (2)$$

und

$$C_{H2max} \text{ [Moleküle/cm}^3\text{]} = 2{,}0 \times 10^{18} \; \varepsilon \qquad (3)$$

(Pulsenergiedichte $\varepsilon$ jeweils in mJ/cm$^2$).

Durch die Einstellung des Wasserstoffgehalts anhand der Bemessungsregeln (2) und (3) wird das Quarzglas hinsichtlich seines Schädigungsverhaltens gegenüber kurzwelliger UV-Strahlung optimiert. Bemessungsregel (2) ergibt eine Mindestkonzentration an Wasserstoff in Abhängigkeit von den Bestrahlungsbedingungen (Pulsenergiedichte und Pulszahl) an, unterhalb von der die defektausheilende Wirkung von Wasserstoff so gering ist, dass es während des bestimmungsgemäßen Einsatzes des optischen Bauteils zu nicht tolerierbaren Transmissionsverlusten kommt. Bemessungsregel (3) hingegen definiert eine Obergrenze an Wasserstoff in Abhängigkeit von den Bestrahlungsbedingungen (Pulsenergiedichte und Pulszahl), oberhalb der sich der zu RDP führende Schädigungsmechanismus deutlich auswirkt. Die angegebenen Wasserstoff-Konzentrationen beziehen sich jeweils auf den Bereich innerhalb des Quarzglas-Rohlings, der in dem daraus gefertigten optischen Bauteil der höchsten Strahlungsbelastung ausgesetzt ist. Üblicherweis handelt es sich dabei um das Zentrum des Bauteils bzw. des Quarzglas-Rohlings.

Eine weitere Annäherung an den Idealfall wird erreicht, wenn für eine vorgegebene Pulsenergiedichte $\varepsilon$ von mindestens 0,005 mJ/cm$^2$ ein Quarzglas mit einem OH-Gehalt $C_{OH}$, der folgender Bemessungsregel genügt, ausgewählt wird:

$$C_{OH} \text{ [Gew-ppm]} = 1700 \cdot \varepsilon^{0,4} \pm 50 \qquad\qquad (4)$$

Im Idealfall tritt weder Kompaktierung noch Dekompaktierung auf. In der Praxis wird aber in Abhängigkeit von den Bestrahlungsbedingungen und den Quarzglas-Eigenschaften entweder Kompaktierung oder Dekompaktierung beobachtet. Es wurde überraschend gefunden, dass ein Quarzglas mit einem nach Bemessungsregel (4) ausgelegten OH-Gehalt dem genannten Idealfall nahe kommt, das heißt es zeigt weder eine auffällige Kompaktierung noch eine nennenswerte Dekompaktierung, wenn es kurzwelliger UV-Strahlung einer Wellenlänge von < 250 nm mit einer Puls- energiedichte $\varepsilon$ zwischen 0,005 mJ/cm$^2$ und 0,1 mJ/cm$^2$ ausgesetzt wird.

Für eine Pulsenergiedichte im Bereiche der genannten Untergrenze $\varepsilon$= 0,005 mJ/cm$^2$ ergibt die Bemessungs- regel (4) einen mittleren OH-Gehalt zwischen 154 Gew-ppm und 254 Gew.-ppm.

Die Bemessungsregel (4) hat sich insbesondere für die Festlegung des OH-Gehalts im Hinblick auf geringe Kompaktierung und gleichzeitig geringe Dekompaktierung bewährt, wenn die Pulsenergiedichte kleiner als 0,03 mJ/ cm$^2$, vorzugsweise kleiner als 0,01 mJ/cm$^2$, ist.

Für den oberen Grenzwert $\varepsilon$ = 0,01 mJ/cm$^2$ ergibt sich dabei nach Bemessungsregel (4) ein OH-Gehalt zwischen 219 Gew-ppm und 319 Gew-ppm.

Nachfolgend wird die Erfindung anhand von Ausführungsbeispielen und anhand einer Zeichnung näher erläutert. Dabei zeigt

**Figur 1** ein Diagramm zur Erläuterung des Auftretens von Kompaktierung oder Dekompaktierung in Abhängigkeit vom OH-Gehalt des Quarzglases und der Pulsenergiedichte der Strahlung;

**Figur 2** ein Diagramm zur Erläuterung des Auftretens von Kompaktierung oder Dekompaktierung in Abhängigkeit vom OH-Gehalt des Quarzglases bei konstanter Pulsenergiedichte als Funktion der Pulszahl.

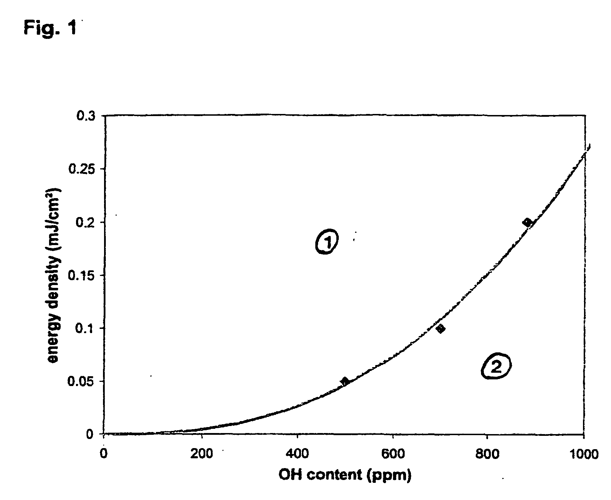

Bei dem Diagramm in **Figur 1** ist der OH-Gehalt $C_{OH}$ in Gew-ppm (in der Figur angegeben als "OH content") gegen die Pulsenergiedichte $\varepsilon$ in mJ/cm$^2$ (in der Figur angegeben als "energy density") aufgetragen. Die eingezeichnete Kurve beruht auf Schädigungsmessungen bei verschiedenen Quarzglas-Qualitäten, die sich in ihrem OH-Gehalt unterscheiden. Die Messung erfolgt unter Laserstrahlung einer Wellenlänge von 193 nm und bei einer Laserpulslänge zwischen 20 und 50 Nanosekunden. Die Laserpulslänge wird nach der in V. Liberman, M. Rothschild, J.H.C. Sedlacek, R.S. Uttaro, A. Grenville "Excimer-laser-induced densification of fused silica: laser-fluence and material-grade effects on scaling law", Journal Non-Cryst.Solids 244 (1999) S.159-171 beschriebenen Methode bestimmt.

Die unter den vorgenannten Bedingungen ermittelten Messwerte sind als Rauten dargestellt. Die Kurve repräsentiert diejenigen $C_{OH}$/$\varepsilon$-Paare, bei denen weder Kompaktierung noch Dekompaktierung beobachtet wird. Der Bereich (1) oberhalb der Kurve kennzeichnet den Bereich, in dem Kompaktierung auftritt, und der Bereich (2) unterhalb der Kurve kennzeichnet den Bereich, in dem Dekompaktierung auftritt.

Der Verlauf der Kurve lässt sich durch die Formel

$$C_{OH} \text{ [Gew-ppm]} = 1700 \cdot \varepsilon \text{ [mJ/cm}^2\text{]}^{0,4}$$

annähernd beschreiben.

Anhand der Kurve oder der vorgenannten Formel kann somit für jede Pulsenergiedichte zwischen 0 und 0,15 mJ/cm$^2$ der OH-Gehalt ausgewählt werden, den ein Quarzglas aufweisen muss, damit es weder Kompaktierung noch Dekompaktierung zeigt.

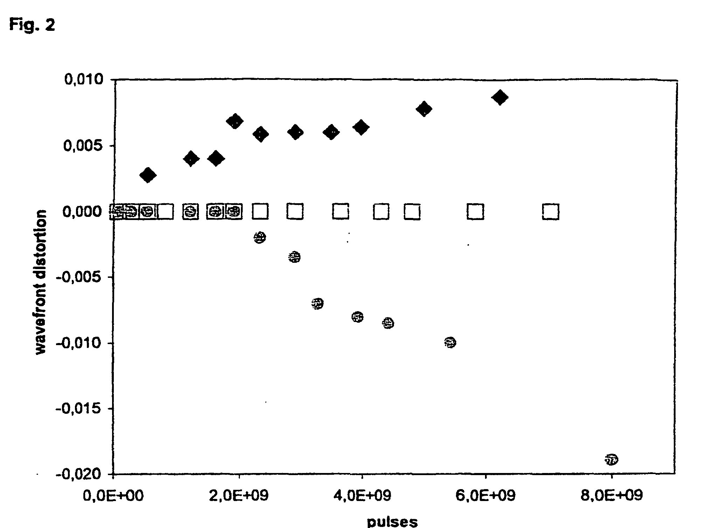

Mit **Figur 2** wird eine weitere Darstellung des Auftretens von Kompaktierung und Dekompaktierung bei einer konstanten Pulsenergiedichte von 0,03 mJ/cm$^2$ als Funktion der Pulszahl (in Figur 2 X-Achsenbezeichnung "pulses") gegeben. Auf der Y-Achse von Figur 2 ist die Wellenfrontverzerrung ("wavefront distortion") in Bruchteilen der Wellenlänge des eingestrahlten Lichts, - hier Licht einer Wellenlänge von 633 nm - aufgetragen. Die Wellenfrontverzerrung ergibt sich dadurch, dass die eingestrahlte, ebene Wellenfront durch räumlich unterschiedliche Brechungsindices gestört wird. Die Wellenfrontverzerrung ist somit ein Maß für das Auftreten von Kompaktierung oder Dekompaktierung. In Figur 2 sind die Messwerte an einem Quarzglas mit 250 Gew.-ppm OH und einem H$_2$-Gehalt von 3 x 10$^{16}$ Moleküle/cm$^3$ sind als Rauten dargestellt. Hier wird Kompaktierung beobachtet. Die Messwerte an einem Quarzglas mit 1200 Gew.-ppm OH und einem H$_2$-Gehalt von 1 x 10$^{18}$ Moleküle/cm$^3$ sind als Kreise dargestellt. Hier wird Dekompaktierung beobachtet.

Messungen an einem optimiertem Quarzglas sind als offene Quadrate dargestellt, wobei weder Kompaktierung noch Dekompaktierung beobachtet wird. Der OH-Gehalt beträgt hierbei 425 Gew-ppm..

Beispiele für derartige Quarzgläser und Vergleichsbeispiele dazu zeigt Tabelle 1.

## Tabelle 1

| 1 | 2 | 3 | 4 | 5 | 6 | 7 | 8 | 9 | 10 | 11 |
|---|---|---|---|---|---|---|---|---|---|---|
| Nr. | OH-Gehalt [Gew-ppm] | H2-Gehalt [Moleküle/cm$^3$] | SiH-Gruppen [Moleküle/cm$^3$] | $O^{\pm}$ [g$^{-1}$] | $\Delta n$ [ppm] | $\Lambda$ [nm/cm] | $\varepsilon$ [mJ/cm$^2$] | Kompaktierung | Dekompak-tierung | Induzierte Absorption |
| 1 | 250 | $<1 \times 10^{15}$ | $< 5 \times 10^{16}$ | $< 10^{17}$ | < 2 | <2 | 0,01 | nicht gemessen | nicht gem. | Ja |
| 2 | 250 | $2 \times 10^{16}$ | $< 5 \times 10^{16}$ | $< 10^{17}$ | < 2 | <2 | 0,01 | Nein | Nein | Nein |
| 2a | 250 | $3 \times 10^{16}$ | $< 5 \times 10^{16}$ | $< 10^{17}$ | < 2 | < 2 | 0,03 | Ja | Nein | Nein |
| 3 | 250 | $1 \times 10^{17}$ | $5 \times 10^{16}$ | $< 10^{17}$ | < 2 | < 2 | 0,01 | Nein | Ja | Ja |
| 4 | 1 | $<1 \times 10^{15}$ | $< 5 \times 10^{16}$ | $> 10^{17}$ | < 2 | < 2 | 0,01 | Ja | Nein | Ja |
| 5 | 900 | $2 \times 10^{16}$ | $< 5 \times 10^{16}$ | $< 10^{17}$ | < 2 | < 1 | 0,01 | Nein | Ja | Nein |
| 6 | 600 | $2 \times 10^{16}$ | $< 5 \times 10^{16}$ | $< 10^{17}$ | < 2 | < 1 | 0,075 | Nein | Nein | Nein |
| 7 | 425 | $2 \times 10^{16}$ | $< 5 \times 10^{16}$ | $< 10^{17}$ | < 2 | < 1 | 0,03 | Nein | Nein | Nein |
| 8 | 425 | $2 \times 10^{16}$ | $< 5 \times 10^{16}$ | $< 10^{17}$ | < 2 | < 1 | 0,1 | Ja | Nein | Nein |
| 9 | 425 | $2 \times 10^{16}$ | $< 5 \times 10^{16}$ | $< 10^{17}$ | < 2 | < 1 | 0,005 | Nein | Ja | Nein |

EP 1 318 124 B1

Tabelle 1 zeigt die Ergebnisse von Bestrahlungsmessungen an Quarzglas-Rohlingen unterschiedlicher chemischer Zusammensetzung und bei verschiedenen Bestrahlungsbedingungen. In den drei letzten Spalten der Tabelle ist qualitativ angegeben, ob der jeweilige Rohling Kompaktierung, Dekompaktierung oder induzierte Absorption zeigt.

Die in den Spalten 2 bis 7 genannten Eigenschaften werden jeweils an einem zylinderfömigen Quarzglasrohling mit einem Außendurchmesser von 240 mm und einer Dicke von 60 mm ermittelt. Es handelt sich dabei um Rohlinge für Linsen für ein Mikrolithographiegerät, das mit Excimer-Laserstrahlung mit einer Wellenlänge von 193 nm arbeitet. Abgesehen von einem geringen Übermaß, das bei der Fertigung der Linse noch abgetragen wird, entsprechen die Rohling-Abmessungen auch den Linsenabmessungen. Das dem CA-Bereich der daraus erhaltenen Linse entsprechende Quarzglas-Volumen wird hier durch die Kreisfläche der Linse- abzüglich eines Randes von wenigen Millimetern für die Linsenfassung - und der Dicke bestimmt. In der Spalte "O$^{\pm}$" von Tabelle 1 ist die Sauerstoffdefektstellen-Konzentration angegeben, in der Spalte "$\Delta$n" die über den CA-Bereich ermittelte Brechungsindexdifferenz, und in der Spalte "A" die im CA-Bereich ermittelte maximale Doppelbrechung.

Zur Durchführung der Bestrahlungsversuche wurden aus den jeweiligen Quarzglas-Rohlingen stabförmige Proben mit einer Abmessung von $25 \times 25 \times 200$ mm$^3$ entnommen und in gleicher Art und Weise vorbereitet (Politur der gegenüberliegenden $25 \times 25$ mm$^2$ -Flächen).

Zur Klärung des Schädigungsverhaltens der Proben hinsichtlich Kompaktierung oder Dekompaktierung wurden die Proben mit UV-Strahlung einer Wellenlänge von 193 nm bestrahlt, wobei die Pulsenergiedichte variiert wurde, wie in Spalte 8 von Tabelle 1 angegeben. Die Pulszahl bei diesen Bestrahlungsversuche betrug jeweils 5 Milliarden.

In der Spalte "Induzierte Absorption" sind zwei Schädigungsmechanismen zusammengefasst, die sich in einem Anstieg der Absorption äußern, nämlich die lineare Absorptionszunahme und der eingangs beschriebene RDP. Zur Klärung des Schädigungsverhaltens der Proben hinsichtlich induzierter Absorption wurden die Proben ebenfalls mit UV-Strahlung einer Wellenlänge von 193 nm und mit der in Spalte 8 genannten Pulsenergiedichte bestrahlt. Zur Festellung des RDP's genügt eine Pulszahl von 1 Millionen Pulsen, während für die Ermittlung der linearen Absorptionszunahme eine Pulszahl von mindestens 1 Milliarde Pulsen erforderlich ist. Hierzu wird der Transmissionsverlust der Probe bestimmt, indem während der Laserbestrahlung die Abnahme der Intensität der verwendeten Laserstrahlung nach der Probe gemessen wird.

Nach den Bestrahlungsversuchen wurden Kompaktierung und Dekompaktierung bestimmt, indem mit einem handelsüblichen Interferometer (Zygo GPI-XP) bei einer Wellenlänge von 633 nm, die relative Zunahme bzw. Abnahme des Brechungsindex im bestrahlten Bereich im Vergleich zum unbestrahlten Bereich gemessen wurde.

Nachfolgend werden die Verfahren zu Herstellung der Quarzglas-Rohlinge, aus denen die Proben 1 bis 9 untersucht wurden, beispielhaft erläutert:

### 1. Rohlinge 1 bis 4

Hierbei handelt es sich um nach dem Sootverfahren hergestellte Quarzgläser.

### Herstellung eines Sootkörpers

Hierbei werden mittels Knallgasbrennern auf einem Trägerrohr aus Aluminiumoxid mit einem Außendurchmesser von 40 mm unter Bildung eines porösen Sootkörpers schichtweise SiO$_2$-Partikel abgeschieden. Den Knallgasbrennern werden Glasausgangsstoffe und Brennstoffe zugeführt und in der dem jeweiligen Knallgasbrenner zugeordneten Brennerflamme zu SiO$_2$-Partikeln umgesetzt. Die Brenner werden während des Abscheideprozesses kontinuierlich entlang der Längsachse in einem vorgegebenen Bewegungsablauf mit einer Amplitude von 15 cm zwischen zwei ortsfesten Wendepunkten hin- und herbewegt, wobei eine SiO$_2$-Schicht nach der anderen auf dem Trägerohr bzw. auf der Oberfläche des sich bildenden Sootkörpers abgeschieden wird, bis dieser einen Außendurchmesser von etwa 300 mm aufweist.

Nach Ende des Abscheideverfahrens und Entfernen des Trägerrohres wird das so erhaltene Sootrohr zum Entfernen der herstellungsbedingt eingebrachten Hydroxylgruppen einer Dehydratationsbehandlung unterworfen.

### Dehydratationsbehandlung bei den Rohlingen 1 bis 3

Zum Zweck der Dehydratation wird das Sootrohr über eine Behandlungsdauer von etwa 8 Stunden bei einer Temperatur um 900°C in einer Vakuumkammer behandelt. Dadurch stellt sich eine im wesentlichen über das Volumen homogene Hydroxylgruppenkonzentration (OH-Gehalt) von etwa 250 Gew-ppm ein.

### Dehydratationsbehandlung bei Rohling 4

Zum Zweck der Dehydratation wird das Sootrohr in vertikaler Ausrichtung in einen Dehydratationsofen eingebracht und zunächst bei einer Temperatur um 900°C in einer chlorhaltigen Atmosphäre behandelt. Die Behandlungsdauer beträgt etwa acht Stunden. Dadurch wird eine Hydroxylgruppenkonzentration (OH-Gehalt) von weniger als 10 Gew-ppm erhalten.

## Verglasungsprozess bei den Rohlingen 1 und 4

Anschließend wird das behandelte Sootrohr in einem vertikal orientierten Vakuum-Verglasungsofen bei einer Temperatur im Bereich um 1400°C gesintert, indem es einer ringförmigen Heizzone zugeführt und darin zonenweise erhitzt wird. Nach dem Verglasen ist molekularer Wasserstoff in dem gesinterten (verglasten) Quarzglas-Rohr nicht mehr nachweisbar (< 1 x $10^{15}$ Moleküle/cm$^3$). Der OH-Gehalt liegt in dem in Tabelle 1 genannten Bereich.

## Verglasungsprozess bei Rohling 2 und 2a

Nach dem Dehydratationsprozess wird das behandelte Sootrohr anschließend in einem vertikal orientierten Verglasungsofen bei einer Temperatur im Bereich um 1400°C gesintert, indem es einer ringförmigen Heizzone zugeführt und darin zonenweise erhitzt wird. Dabei wird im Verglasungsofen wasserstoffhaltige Atmosphäre mit einem Wasserstoffpartialdruck von 10 mbar aufrechterhalten. Nach der Behandlung zeigt das gesinterte (verglaste) Quarzglas-Rohr über seine Wandstärke einen inhomogenen Verlauf der Wasserstoff-Konzentration, derart, dass die Wasserstofikonzentration von der Rohrmantelfläche und von der Rohrinnenbohrung radial zur Mitte der Rohrwandung hin abnimmt. Über die Wandstärke gemittelt liegt der H$_2$-Gehalt nach dieser Prozessstufe bei etwa 4 x $10^{16}$ Molekülen/ cm$^3$. Der OH-Gehalt liegt in dem in Tabelle 1 genannten Bereich.

## Verglasungsprozess bei Rohling 3

Bei Rohling 3 wird das behandelte Sootrohr anschließend in einem vertikal orientierten Verglasungsofen bei einer Temperatur im Bereich um 1400 °C gesintert, indem es einer ringförmigen Heizzone zugeführt und darin zonenweise erhitzt wird. Dabei wird im Verglasungsofen wasserstoffhaltige Atmosphäre, mit einem Wasserstoffpartialdruck von 150 mbar, aufrechterhalten. Nach der Behandlung zeigt das gesinterte (verglaste) Quarzglas-Rohr über seine Wandstärke einen inhomogenen Verlauf der Wasserstoff-Konzentration, derart, dass die Wasserstoffkonzentration von der Rohrmantelfläche und von der Rohrinnenbohrung radial zur Mitte der Rohrwandung hin abnimmt. Über die Wandstärke gemittelt liegt der H$_2$-Gehalt bei etwa 2 x $10^{17}$ Molekülen/cm$^3$ . Der OH-Gehalt liegt in dem in Tabelle 1 genannten Bereich.

## Umformprozess und Homogenisieren der Rohlinge 1 bis 4

Aus dem gesinterten (verglasten) Quarzglas-Rohr wird durch Umformen und anschließendem Homogenisieren (Verdrillen und Wenden) ein Vollzylinder mit einem Außendurchmesser von 300 mm und einer Länge von 100 mm hergestellt. Der Rohling wird in einem Tempervorgang unter Luft und Atmosphärendruck auf 1100 °C erhitzt und anschließend mit einer Abkühlrate von 1 °C/h abgekühlt. Anschließend werden radial 30 mm und beidseitig axial 20 mm Übermass entfernt, um so Gradienten der Wasserstoffkonzentration bedingt durch Ausdiffusion zu vermeiden. Der Rohling weist den OH-Gehalt auf gemäß Tabelle 1 und den Wasserstoffgehalt wie in der Tabelle angegeben. Die Konzentration an Si-H-Gruppen beträgt - mit Ausnahme von Rohling 3 - weniger als 5 x $10^{16}$ Moleküle pro cm$^3$ (jeweils gemessen im CA-Bereich). Es wird eine Spannungsdoppelbrechung von weniger als 2 nm/cm gemessen, und die Brechzahlverteilung ist derart homogen, dass der Unterschied zwischen dem Maximalwert und dem Minimalwert unterhalb von 2x$10^{-6}$ liegt. Die Konzentration an Sauerstoffdefektstellen wird bei den Rohlingen 1, 2 und 3 mit weniger als 1 x $10^{17}$ pro g ermittelt, wohingegen sie bei Rohling 4 oberhalb dieses Wertes liegt.

Durch das Homogenisieren wird eine gleichmäßige Verteilung der genannten Komponenten über das gesamte Zylindervolumen erreicht. Dies gilt insbesondere auch für den Wasserstoffgehalt von Rohling 2 und 2a.

## 2. Rohlinge 5 und 6

Hierbei handelt es sich um nach dem Direktverglasungsverfahren hergestellte Quarzgläser.

## Abscheideprozess

Auf einem scheibenförmigen, um seine Mittelachse rotierenden Substrat wird mittels eines Knallgasbrenners feinteiliges SiO$_2$ abgeschieden, das unmittelbar durch die Hitze der Knallgasflamme unter Bildung eines stabförmigen Quarzglasrohlings verglast wird. Aufgrund der verwendeten Ausgangssubstanzen ist der Quarzglasrohling praktisch chlorfrei (der Chlorgehalt liegt unterhalb von 1 Gew.-ppm). Der Wasserstoffgehalt liegt in dieser Verfahrensstufe noch bei etwa 1 x 10$^{18}$ Molekülen/cm$^3$.

**Maßnahmen zum Einstellen der OH-Gehalte bei Rohling 5 und 6**

Wie aus Tabelle 1 ersichtlich, unterscheiden sich die Rohlinge 5 und 6 lediglich in den jeweiligen OH-Gehalten. Der OH-Gehalt wird dadurch vorgegeben, dass während des Abscheidevorgangs die Substrattemperatur durch Erhöhen bzw. Erniedrigen der Wasserstoff- und Sauerstoffzuflüsse im Knallgasbrenner eingestellt wird. Eine Temperaturerhöhung führt zu einem höheren OH-Gehalt, während eine Erniedrigung der Temperatur zu einem niedrigen OH-Gehalt führt.

**Umformprozess und Homogenisieren der Rohlinge 5 und 6**

Zum Homogenisieren wird der Quarzglasrohling anschließend in eine Quarzglas-Drehbank eingespannt, zonenweise auf eine Temperatur von ca. 2000 °C erhitzt und dabei verdrillt. Ein dafür geeignetes Homogenisierungsverfahren ist in der EP-A1 673 888 beschrieben. Nach mehrmaligern Verdrillen liegt ein Quarzglaskörper in Form eines Rundstabes mit einem Durchmesser von 80 mm und einer Länge von ca. 800 mm vor, der in drei Richtungen schlierenfrei ist.

Durch eine Heißverformung bei einer Temperatur von 1700 °C und unter Verwendung einer stickstoffgespülten Schmelzform wird daraus ein kreisrunder Quarzglaszylinder mit einem Außendurchmesser von 300 mm und einer Länge von 100 mm gebildet. In einem Tempervorgang wird der Quarzglaszylinder unter Luft und Atmosphärendruck auf 1100 °C erhitzt, für ca. 100h bei dieser Temperatur gehalten und anschließend mit einer Abkühlrate von 1 °C/h abgekühlt. Anschließend werden radial 30mm und beidseitig axial 20 mm Übermass entfernt, um so Gradienten der Wasserstoffkonzentration bedingt durch Ausdiffusion zu vermeiden. Der Rohling weist eine Wasserstoffkonzentration von ca. 2 x 10$^{16}$ Molekülen/cm$^3$ und einen OH-Gehalt von ca. 900 Gew.-ppm (Rohling 5) bzw. von 600 Gew.-ppm (Rohling 6) auf. Es wird lediglich noch eine Spannungsdoppelbrechung von maximal 2 nm/cm gemessen, und die Brechzahlverteilung ist derart homogen, dass der Unterscheid zwischen dem Maximalwert und dem Minimalwert unterhalb von 2x10$^{-6}$ liegt.

Der so hergestellte Quarzglaszylinder ist als Rohling für die Herstellung einer optischen Linse für ein Mikrolithographiegerät unmittelbar geeignet.

### 3. Rohlinge 7 bis 9

Die Rohlinge 7 bis 9 bestehen aus dem gleichen Quarzglas. Es handelt sich um eine Quarzglas-Qualität, die durch Mischen von nach dem Sootverfahren hergestelltem Quarzglas und nach dem Direktverglasungsverfahren hergestelltem Quarzglas erhalten wird.

Hierzu wird ein Quarzglas-Stab aus einem dem Rohling 2 oder 2a entsprechenden Quarzglas, und ein weiterer Quarzglas-Stab aus einem dem Rohling 6 entsprechenden Quarzglas hergestellt und miteinander vermischt. Die Mengenverhältnisse der beiden Quarzglas-Qualitäten werden dabei so gewählt, dass sich bei Einsatz des Mischquarzglases in Verbindung mit UV-Strahlung einer Wellenlänge von 193 nm und einer Pulsenergie $\varepsilon$ = 0,03 mJ/cm$^2$ ein OH-Gehalt einstellt, der folgender Bemessungsregel genügt:

$$C_{OH} \text{ [Gew-ppm]} = 1700 \cdot \varepsilon^{0,4} \qquad (\varepsilon \text{ in mJ/cm}^2)$$

Mit $\varepsilon$ = 0,03 mJ/cm$^2$ ergibt sich nach dieser Bemessungsregel ein im Mischquarzglas einzustellender OH-Gehalt von etwa 425 Gew-ppm (genau: 418 Gew-ppm).

Da das Quarzglas entsprechend Rohling 2 (bzw. Rohling 2a) einen OH-Gehalt von 250 Gew-ppm und das Quarzglas entsprechend Rohling 6 einen OH-Gehalt von 600 Gew-ppm aufweist, werden zur Einstellung eines OH-Gehalts im Mischquarzglas von 425 Gew-ppm gleiche Mengen beider Quarzglas-Qualitäten benötigt. Diese werden jeweils in Form von Quarzglas-Stäben mit einem Gewicht von 8 kg bereitgestellt. Die Quarzglas-Stäbe werden miteinander verdrillt, indem die Stäbe sich zunächst längsseitig berührend angeordnet, zonenweise auf eine Temperatur von etwa 2000 °C erhitzt, dabei erweicht und um eine gemeinsame, parallel zur Längsachse verlaufende Rotationsachse unter Bildung einer Misch-Quarzglases rotiert werden. Zur Beseitigung verbleibender Schlieren wird anschließend das in der EP-A1 673 888 beschriebene mehrmalige Verdrillen und Wenden durchgeführt.

Durch anschließende Heißverformung bei einer Temperatur von 1700 °C und unter Verwendung einer stickstoffgespülten Schmelzform wird daraus ein kreisrunder Mischquarzglaszylinder mit einem Außendurchmesser von 300 mm und einer Länge von 100 mm gebildet. In einem Tempervorgang wird der Quarzglaszylinder unter Luft und Atmosphärendruck auf 1100 °C erhitzt, für ca. 50h bei dieser Temperatur gehalten und anschließend mit einer Abkühlrate von 1 °C/h abgekühlt. Danach werden radial 30 mm und beidseitig axial 20 mm Übermass entfernt, um so Gradienten der Wasserstoffkonzentration bedingt durch Ausdiffusion zu vermeiden. Der Rohling weist eine Wasserstoffkonzentration von ca. 2 x $10^{16}$ Molekülen/cm$^3$ und einen OH-Gehalt von ca. 425 Gew.-ppm auf, was dem Mittelwert des OH-Gehalts der ursprünglichen Rohlinge 2 und 6 entspricht. Es wird lediglich noch eine Spannungsdoppelbrechung von maximal 2 nm/cm gemessen, und die Brechzahlverteilung ist derart homogen, dass der Unterschied zwischen dem Maximalwert und dem Minimalwert unterhalb von $2x10^{-6}$ liegt.

Auch dieser Quarzglas-Block ist als Rohling für die Herstellung einer optischen Linse für ein Mikrolithographiegerät unmittelbar geeignet.

## Maßnahmen zur Auswahl der Ober- und Untergrenze des H$_2$-Gehaltes

Für die Auswahl der Obergrenze und der Untergrenze des H$_2$-Gehalts gelten die Bemessungsregeln (2) und (3) in Verbindung mit der typischen Einsatz-Pulsenergiedichte von 0,03 mJ/cm$^2$.

$$C_{H2min} \text{ [Moleküle/cm}^3 \text{ ]} = 1{,}0 \times 10^6 \, (0{,}03)^2 \, P \qquad (2)$$

$$C_{H2max} \text{ [Moleküle/cm}^3 \text{ ]} = 2 \times 10^{18} \, (0{,}03) \qquad (3)$$

Mit $\varepsilon$ = 0,03 mJ/cm$^2$ ergibt sich nach dieser Bemessungsregel und einer maximalen Pulszahl von 1 x $10^{12}$ ein im Quarzglas einzustellender minimaler H$_2$-Gehalt von $9x10^{14}$ Molekülen/cm$^3$ und ein maximaler H$_2$-Gehalt von 6 $x10^{16}$ Molekülen/cm$^3$.

Die Einstellung des vorgegebenen H$_2$-Gehaltes erfolgt durch die oben beschriebene Temperung der Rohlinge bei 1100°C unter Berücksichtigung der dabei ablaufenden Diffusionsprozesse.

Zum Homogenisieren wird der Quarzglasrohling in eine Quarzglas-Drehbank eingespannt, zonenweise auf eine Temperatur von ca. 2000 °C erhitzt und dabei verdrillt. Ein dafür geeignetes Homogenisierungsverfahren ist in der EP-A1 673 888 beschrieben. Nach mehrmaligem Verdrillen liegt ein Quarzglaskörper in Form eines Rundstabes mit einem Durchmesser von 80 mm und einer Länge von ca. 800 mm vor, der in drei Richtungen schlierenfrei ist.

Durch eine Heißverformung bei einer Temperatur von 1700 °C und unter Verwendung einer stickstoffgespülten Schmelzform wird daraus ein kreisrunder Quarzglaszylinder mit einem Außendurchmesser von 240 mm und einer Länge von 80 mm gebildet. Nach einem weiteren Tempervorgang, bei der der Quarzglaszylinder unter Luft und Atmosphärendruck auf 1100 °C erhitzt und anschließend mit einer Abkühlrate von 2°C/h auf 900°C abgekühlt wird, wird lediglich noch eine Spannungsdoppelbrechung von maximal 2 nm/cm gemessen, und die Brechzahlverteilung ist derart homogen, dass der Unterscheid zwischen dem Maximalwert und dem Minimalwert unterhalb von $2x10^{-6}$ liegt. Aus den zentralen Bereich des Rohlings wird eine stabförmige Probe mit einer Abmessung von 25 x 25 x 200 mm$^3$ entnommen, die einen H$_2$ Gehalt von ca. $2x10^{16}$ Molekülen/cm$^3$ und ca. 425 Gew-ppm OH aufweist.

## • Ergebnisbewertung

Hinsichtlich des Auftretens von Kompaktierung, Dekompaktierung und induzierter Absorption gemäß Tabelle 1 zeigen die Rohlinge 2 und 7 bei einer Energiedichte von 0,01 bzw. 0,03 mJ/cm$^2$ die besten Ergebnisse. Rohling 2a mit einem geringfügig höheren H$_2$-Gehalt als Rohling 2 zeigt bei Einwirkung von ultravioletter Strahlung einer Energiedichte von 0,03 mJ/cm$^2$ Kompaktierung (vergleiche Figur 2), was je nach Anwendungsfall in Grenzen tolerierbar sein kann. Rohling 6 zeigt gundsätzlich ein gutes Ergebnis hinsichtlich Kompaktierung, Dekompaktierun und induzierter Absorption, dies allerdings nur bei einer verhältnismäßig hohen Energiedichte von 0,075 mJ/cm$^2$. In Bezug auf den relativ hohen OH-Gehalt bei Rohling 6, der tendenziell eher zu Dekompaktierung führt, ist dessen Einsatz zum Mischen mit einem Rohling, der nach dem Sootverfahren hergestellt ist und einen besonders niedrigen OH-Gehalt aufweist, besonders geeignet. Dies wird durch die Ergebnisse von Rohling 7 bestätigt.

## Patentansprüche

1. Quarzglasrohling für ein optisches Bauteil zur Übertragung ultravioletter Strahlung einer Wellenlänge von 250 nm und kürzer mit einer Glasstruktur im wesentlichen ohne Sauerstoffdefektstellen, einem H$_2$-Gehalt im Bereich von 0,1 x $10^{16}$ Molekülen/cm$^3$ bis 4,0 x $10^{16}$ Molekülen/cm$^3$, einem OH-Gehalt im Bereich von 125 Gew-ppm bis 450 Gew-ppm, einem Gehalt an SiH-Gruppen von $< 5 \times 10^{16}$ Molekülen/cm$^3$, einer Inhomogenität im Brechungsindex $\Delta$n von weniger als 2 ppm und einer Spannungsdoppelbrechung von weniger als 2 nm/cm.

2. Quarzglasrohling nach Anspruch 1, **dadurch gekennzeichnet, dass** der OH-Gehalt im Bereich von 200 Gew-ppm bis 350 Gew-ppm liegt.

3. Quarzglasrohling nach Anspruch 1 oder 2, **dadurch gekennzeichnet, dass** der H$_2$-Gehalt im Bereich von lx 10$^{16}$ Moleküle/cm$^3$ bis $3 \times 10^{16}$ Moleküle/cm$^3$ liegt.

4. Verfahren zur Herstellung eines Quarzglasrohlings nach einem der Ansprüche 1 bis 3 umfassend die Herstellung mindestens einer ersten, zylinderförmigen Quarzglasvorform durch Flammenhydrolyse einer Si-enthaltenden Verbindung, wobei SiO$_2$- Partikel gebildet und auf einem rotierenden Träger schichtweise unter Bildung eines porösen Sootkörpers abgeschieden werden und der Sootkörper anschließend zu der Quarzglasvorform verglast wird, die über ihr Volumen einen inhomogenen H$_2$-Konzentrationsverlauf aufweist, **dadurch gekennzeichnet, dass** die Quarzglasvorform einer Homogenisierungsbehandlung unterzogen wird, durch welche ein radialer H$_2$-Konzentrationsverlauf mit einer maximalen Abweichung von 25% von einem Mittelwert, der im Bereich von $0,1 \times 10^{16}$ Molekülen/cm$^3$ bis $4,0 \times 10^{16}$ Molekülen/cm$^3$ liegt, eingestellt wird.

5. Verfahren nach Anspruch 4, **dadurch gekennzeichnet, dass** durch die Homogenisierungsbehandlung ein radialer H$_2$-Konzentrationsverlauf mit einer maximalen Abweichung von 15% vom Mittelwert eingestellt wird.

6. Verfahren nach Anspruch 4, **dadurch gekennzeichnet, dass** die Quarzglasvorform durch Verglasen des Sootkörper unter einer H$_2$-enthaltenden Atmosphäre hergestellt wird.

7. Verfahren nach Anspruch 6, **dadurch gekennzeichnet, dass** die H$_2$-enthaltende Atmosphäre beim Verglasen eine H$_2$/He-Atmosphäre oder eine H$_2$/N$_2$-Atmosphäre oder eine H$_2$/H$_2$O-Atmosphäre ist.

8. Verfahren nach Anspruch 4 oder 5, **dadurch gekennzeichnet, dass** die Quarzglasvorform einer den Wasserstoffgehalt absenkenden Temperbehandlung unterzogen wird.

9. Verfahren zur Herstellung eines Quarzglasrohlings nach Anspruch 4, **dadurch gekennzeichnet, dass** die Homogenisierungsbehandlung durch Verdrillen und Wenden der Quarzglasvorform erfolgt.

10. Verfahren zur Herstellung eines Quarzglasrohlings nach Anspruch 4, **dadurch gekennzeichnet, dass** die Homogenisierungsbehandlung ein Mischen der ersten Quarzglasvorform mit einer zweiten Quarzglasvorform unter Bildung eines Mischquarzglases mit einem OH-Gehalt im Mittel im Bereich von 125 bis 450 Gew-ppm, insbesondere 200 bis 350 Gew-ppm, umfasst, wobei ein H$_2$-Gehalt von $0,1 \times 10^{16}$ Moleküle/cm$^3$ bis $4 \times 10^{16}$ Moleküle/cm$^3$ eingestellt wird.

11. Verfahren nach Anspruch 10, **dadurch gekennzeichnet, dass** zur Herstellung der zweiten Quarzglasvorform SiO$_2$-Partikel gebildet und auf einen rotierenden Träger abgeschieden und direkt verglast werden.

12. Verfahren nach Anspruch 10, **dadurch gekennzeichnet, dass** das erste Quarzglas einen OH-Gehalt im Bereich von 10 Gew-ppm bis 300 Gew-ppm, das zweite Quarzglas einen OH-Gehalt im Bereich von 400 Gew-ppm bis 1300 Gew-ppm aufweist.

13. Verwendung eines Quarzglasrohlings nach einem der Ansprüche 1 bis 3, für ein Bauteil für den Einsatz in der Mikrolithographie in Verbindung mit ultravioletter Strahlung einer Wellenlänge von 250 nm und kürzer **dadurch gekennzeichnet, dass** für eine vorgegebene Pulszahl P ein Quarzglas ausgewählt wird, das einen Mindestwasserstoffgehalt C$_{H2min}$ und einen Maximalwasserstoffgehalt C$_{H2max}$ aufweist, die folgenden Bemessungsregeln genügen:

$$C_{H2min} \text{ [Moleküle/cm}^3\text{]} = 1,0 \times 10^6 \; \varepsilon^2 \; P \qquad\qquad (2)$$

und

$$C_{H2max} \text{ [Moleküle/cm}^3\text{]} = 2{,}0 \times 10^{18} \, \varepsilon \tag{3}$$

(Pulsenergiedichte $\varepsilon$ jeweils in mJ/cm$^2$).

14. Verwendung eines Quarzglasrohlings nach Anspruch13, **dadurch gekennzeichnet, dass** für einen Einsatz mit ultravioletter Strahlung einer vorgegebenen Pulsenergiedichte $\varepsilon$ von mindestens 0,005 mJ/cm$^2$ ein Quarzglas mit einem OH-Gehalt ausgewählt wird, der folgender Bemessungsregel genügt:

$$C_{OH} \text{ [Gew-ppm]} = 1{,}7 \times 10^3 \cdot \varepsilon^{0,4} \pm 50 \tag{4}.$$

15. Verwendung eines Quarzglasrohlings nach Anspruch 13 oder 14, **dadurch gekennzeichnet, dass** die Energiedichte $\varepsilon$ kleiner als 0,03 mJ/cm$^2$, insbesondere kleiner als 0,01 mJ/cm$^2$ ist.

**Claims**

1. A quartz glass blank for an optical component for transmitting ultraviolet radiation of a wavelength of 250 nm and shorter, with a glass structure essentially without oxygen defects, an $H_2$ content ranging from 0.1 x 10$^{16}$ molecules/cm$^3$ to 4.0 to 10$^{16}$ molecules/cm$^3$, an OH content ranging from 125 wt ppm to 450 wt ppm, a content of SiH groups of < 5 x 10$^{16}$ molecules/cm$^3$, an inhomogeneity in the refractive index $\Delta$n of less than 2 ppm and a strain birefringence of less than 2 nm/cm.

2. A quartz glass blank as claimed in claim 1, **characterized in that** the OH content is within the range of 200 wt ppm to 350 wt ppm.

3. A quartz glass blank as claimed in claim 1 or 2, **characterized in that** the $H_2$ content is within the range of 1 x 10$^{16}$ molecules/cm$^3$ to 3 x 10$^{16}$ molecules/cm$^3$.

4. A method for preparing a quartz glass blank as claimed in any of claims 1 to 3, comprising preparing at least one first cylindrical quartz glass preform by flame hydrolysis of a Si-containing compound, $SiO_2$ particles being formed and deposited on a rotating carrier in layers forming a porous soot body and the soot body being subsequently vitrified to obtain the quartz glass preform having an inhomogeneous $H_2$ concentration profile over its volume, **characterized in that** the quartz glass preform is subjected to a homogenization treatment by which a radial $H_2$ concentration profile is adjusted with a maximum deviation of 25% from a mean value which is in the range of 0.1 x 10$^{16}$ molecules/cm$^3$ to 4.0 to 10$^{16}$ molecules/cm$^3$.

5. A method as claimed in claim 4, **characterized in that** a radial $H_2$ concentration profile with a maximum deviation of 15% from the mean value is adjusted by the homogenization treatment.

6. A method as claimed in claim 4, **characterized in that** the quartz glass preform is prepared by vitrifying the soot body under an $H_2$-containing atmosphere.

7. A method as claimed in claim 6, **characterized in that** the $H_2$-containing atmosphere during vitrification is an $H_2$/He atmosphere or an $H_2$/$N_2$ atmosphere or an $H_2$/$H_2$O atmosphere.

8. A method as claimed in claim 4 or 5, **characterized in that** the quartz glass preform is subjected to an annealing treatment which lowers the hydrogen content.

9. A method for preparing a quartz glass blank as claimed in claim 4, **characterized in that** the homogenization treatment is carried out by twisting and turning the quartz glass preform.

10. A method for preparing a quartz glass blank as claimed in claim 4, **characterized in that** the homogenization treatment comprises mixing the first quartz glass preform with a second quartz glass preform with formation of a mixed quartz glass having an OH content on average in the range from 125 to 450 wt ppm, particularly 200 to 350 wt ppm, an $H_2$ content of 0.1 to 10$^{16}$ molecules/cm$^3$ to 4 x 10$^{16}$ molecules/cm$^3$ being adjusted.

**11.** A method as claimed in claim 10, **characterized in that** for preparing the second quartz glass preform $SiO_2$ particles are formed and deposited on a rotating carrier and directly vitrified.

**12.** A method as claimed in claim 10, **characterized in that** the first quartz glass has an OH content ranging from 10 wt ppm to 300 wt ppm, the second quartz glass has an OH content ranging from 400 wt ppm to 1300 wt ppm.

**13.** Use of a quartz glass blank as claimed in any of claims 1 to 3 for a component for use in microlithography in combination with ultraviolet radiation of a wavelength of 250 nm and shorter, **characterized in that** for a predetermined pulse number P a quartz glass is selected having a minimum hydrogen content $C_{H2min}$ and a maximum hydrogen content $C_{H2max}$ satisfying the following dimensioning rules:

$$C_{H2min} \text{ [molecules/cm}^3\text{]} = 1.0 \times 10^6 \; \varepsilon^2 \; P \tag{2}$$

and

$$C_{H2max} \text{ [molecules/cm}^3\text{]} = 2.0 \times 10^{18} \; \varepsilon \tag{3}$$

(Pulse energy density $\varepsilon$ each time in mJ/cm$^2$)

**14.** Use of a quartz glass blank as claimed in claim 13, **characterized in that** for use with ultraviolet radiation of a predetermined pulse energy density $\varepsilon$ of at least 0.005 mJ/cm$^2$ a quartz glass is selected with an OH content satisfying the following dimensioning rule:

$$\text{ù } C_{OH} \text{ [wt ppm]} = 1.7 \times 10^3 \cdot \varepsilon^{0.4} \pm 50 \tag{4}.$$

**15.** Use of a quartz glass blank as claimed in claim 13 or 14, **characterized in that** the pulse energy density $\varepsilon$ is less than 0.03 mJ/cm$^2$, particularly less than 0.01 mJ/cm$^2$.

**Revendications**

**1.** Ebauche en verre de quartz pour un composant optique pour la transmission de rayonnement ultraviolet d'une longueur d'ondes inférieure ou égale à 250 nm une structure de verre essentiellement sans défaut d'oxygène, une teneur en $H_2$ comprise entre 0,1 x $10^{16}$ de molécules/cm$^3$ et 4,0 x $10^{16}$ molécules/cm$^3$, une teneur en OH comprise entre 125 ppm en poids et 450 ppm en poids, une teneur en groupes SiH > 5 x $10^{16}$ molécules/cm$^3$, une inhomogénéité dans l'indice de réfraction $\Delta n$ inférieure à 2 ppm et une double réfraction de tension inférieure à 2 nm/cm.

**2.** Ebauche en verre de quartz selon la revendication 1, **caractérisé en ce que** la teneur en OH est comprise entre 200 ppm en poids et 350 ppm en poids.

**3.** Ebauche en verre de quartz selon la revendication 1 ou 2, **caractérisé en ce que** la teneur en H2 est comprise entre 1 x $10^{16}$ de molécules/cm$^3$ et 3 x $10^{16}$ molécules/cm$^3$.

**4.** Procédé pour la fabrication d'une ébauche de verre de quartz selon l'une des revendications 1 à 3, comprenant la fabrication d'une première ébauche de verre de quartz de forme cylindrique par hydrolyse à la flamme d'un composé contenant du Si, des particules de SiO2 étant formées et étant précipitées sur un substrat rotatif par couche en formant un corps de suie poreux et le corps de su8ie poreux étant ensuite vitrifié en une ébauche de verre de quartz qui présente une courbe de concentration de $H_2$ inhomogène sur son volume **caractérisé en ce que** l'ébauche de verre de quartz est soumise à un traitement d'homogénéisation qui permet de régler une courbe radiale de concentration $H_2$ avec une différence maximale de 25 % de la valeur médiane comprise entre 0,1 x $10^{16}$ molécules/cm$^3$ à 4,1 x$10^{16}$.

**5.** Procédé selon la revendication 4, **caractérisé en ce que** par le traitement d'homogénéisation une courbe radiale de concentration H2 est paramétrée avec une divergence maximale de la valeur moyenne de 15%.

**6.** Procédé selon la revendication 4, **caractérisé en ce que** l'ébauche en verre de quartz est fabriquée par vitrification du corps de suie sous une atmosphère contenant du H2.

**7.** Procédé selon la revendication 6, **caractérisé en ce que** lors de la vitrification l'atmosphère contenant du $H_2$ est une atmosphère $H_2$/He ou une atmosphère $H_2$/$N_2$ ou une atmosphère $H_2$/$H_2$O.

**8.** Procédé selon la revendication 4 ou 5, **caractérisé en ce que** l'ébauche en verre de quartz est soumise à un traitement de trempe diminuant la teneur en hydrogène.

**9.** Procédé pour la fabrication d'une ébauche de verre de quartz selon la revendication 4, **caractérisé en ce que** le traitement d'homogénéisation s'effectue par tordage et retournement de l'ébauche en verre de quartz.

**10.** Procédé pour la fabrication d'une ébauche de verre de quartz selon la revendication 4, **caractérisé en ce que** le traitement d'homogénéisation comprend un mélange de la première ébauche en verre de quartz avec une seconde ébauche en verre de quartz en formant un verre de quartz mixe avec une teneur moyenne eh OH comprise entre 125 et 450 ppm en poids, en particulier entre 200 et 350 ppm en poids, une teneur eh H2 étant paramétrée entre 0,1 x 1016 molécules/cm$^3$ et 4 x 1016 molécules/cm$^3$.

**11.** Procédé selon la revendication 10, **caractérisé en ce que** pour la fabrication de la seconde ébauche en verre de quartz des particules de SiO2 sont formées et précipitées sur un substrat rotatif et directement vitrifiées.

**12.** Procédé selon la revendication 10, **caractérisé en ce que** le premier verre de quartz présente une teneur en OH comprise entre 10 ppm en poids et 300 ppm en poids et le second verre de quartz une teneur en OH comprise entre 400 ppm en poids et 1300 ppm en poids.

**13.** Utilisation d'une ébauche de verre de quartz selon l'une des revendications 1 à 3 pour un composant pour l'emploi dans la microlithographie en liaison avec le rayonnement ultraviolet d'une longueur d'ondes inférieure ou égale à 250 nm, **caractérisé en ce que** pour un nombre en mode impulsionnel prédéterminé, il est sélectionné un verre de quartz qui présente une teneur minimale en hydrogène $C_{H2min}$ et une teneur maximale en hydrogène $C_{H2max}$ qui répondent aux règles de mesure suivantes:

$$C_{H2min}[\text{molécules/cm}^3] = 1,0 \times 10^6 \; \varepsilon^2 \; P \tag{2}$$

et

$$C_{H2max}[\text{molécules/cm}^3] = 2,0 \times 10^{18} \; \varepsilon \tag{3}$$

(densité d'énergie $\varepsilon$ en mode impulsionnel exprimée respectivement en mJ/cm$^3$)

**14.** Utilisation d'une ébauche en verre de quartz selon la revendication 13, **caractérisé en ce que** pour l'emploi avec le rayonnement ultraviolet d'une densité d'énergie $\varepsilon$ en mode impulsionnel prédéterminé d'au moins 0,005 mJ/cm$^2$, on sélectionne un verre de quartz avec une teneur en OH qui répond à la règle de mesure suivante

$$C_{OH} \; [\text{ppm en poids}] = 1,7 \times 10^3 \; . \; \varepsilon^{0,4} \pm 50 \tag{4}$$

**15.** Utilisation d'une ébauche de verre de quartz selon la revendication 13 ou 14, **caractérisée en ce que** la densité d'énergie $\varepsilon$ en mode impulsionnel est inférieure à 0,03 mJ/cm$^2$, de préférence inférieure à 0,01 mJ/cm$^2$.

**Fig. 1**

EP 1 318 124 B1

**Fig. 2**

19